# EUROPEAN PATENT SPECIFICATION

(11) **EP 0 951 785 B1**
(45) Date of publication and mention of the grant of the patent: **15.09.2004**
(21) Application number: 97905298.2
(22) Date of filing: 27.02.1997
(51) Int. Cl.: H04Q 3/00, H04M 3/36

(54) **TELECOMMUNICATIONS NETWORKS**
FERNMELDENETZE
RESEAUX DE TELECOMMUNICATIONS

(30) Priority: 05.03.1996 EP 96301504; 05.03.1996 GB 9604675
(43) Date of publication of application: 27.10.1999
(73) Proprietor: BRITISH TELECOMMUNICATIONS public limited company, London EC1A 7AJ (GB)
(72) Inventor: HOY, Michael Davey, Ipswich, Suffolk IP3 8QY (GB)
(86) International application number: PCT/GB1997/000558
(87) International publication number: WO 1997/033440

(56) References cited:
- EP-A- 0 334 612
- EP-A- 0 340 665
- EP-A- 0 687 116
- WO-A-93/07722
- US-A- 4 224 479
- IEE COLLOQIUM ON "FRAME RELAY" - DIGEST NO 096, 22 April 1992, LONDON (GB), pages 3/1-3/4, XP002010407 A. WATERS ET AL: "Congestion Control for Frame Relay Networks"
- COMPUTER NETWORKS AND ISDN SYSTEMS, vol. 20, no. 1/5, December 1990, AMSTERDAM (NL), pages 143-153, XP000161279 P. CHEMOUIL ET AL: "Integrated Network Management and Control"
- IEE COLLOQIUM ON DEVELOPMENTS IN SIGNALLING - DIGEST NO 1993/221 - PAPER 6, 22 November 1993, LONDON (GB), page 1-5 XP000443995 P. WILLIAMS: "Implications for signalling network development of automatic focused overload control"
- ELECTRONICS AND COMMUNICATIONS IN JAPAN - PART I, vol. 72, no. 5, May 1989, NEW YORK (US), pages 96-107, XP000085035 H. TOKUNAGA ET AL: "Traffic Congestion Control Based on Call Density Control"
- PROCEEDINGS OF THE THIRTEENTH INTERNATIONAL TELETRAFFIC CONGRESS, 19 - 26 June 1991, COPENHAGEN (DK), pages 115-120, XP000303017 R. FAREL ET AL: "Design and Analysis of overload control strategies for transaction network databases"

## Description

The present invention relates to telecommunications networks and more particularly to such networks of the kind adapted to provide non intrusive telephony related services to customers premises.

The public switched telecommunications network (PSTN) has developed from a system which carries only voice communication to one adapted to carry facsimile messages and data communications. Much of this development was accomplished using space switching techniques and analogue signalling in which end-to-end communication was, to all intents and purposes, along a pair of dedicated wires for the duration of the end-to-end communication.

The quality of communication was improved by for example digitising speech signals using pulse code modulation for example so that deterioration of the analogue signal due to resistive and capacitive effects could be compensated for making communication over much longer distances possible. Once digitalisation of speech signals became common practice part of the communications network could be more effectively used by compressing several calls onto one main communication route using time division multiplexing techniques. Initially most of the switching was still carried out using space division techniques physically switching the connection between one pair of wires and another.

Further development in digital switching techniques lead to substantially improved networks and the major PSTN in the United Kingdom is substantially digital from the local exchange. In a digital network it is possible to provide many more services to end customers. For example by using techniques to activate terminals at the customer's premises selectively and without effecting alert of customer telephones or related equipment responsive to a ringing current, telemetry, remote control, messaging and other services can be provided.

As the number of such services grow for example telemetry operations may be provided by a number of different operators, the possibility of a focused overload on a particular route increases. Thus if coincidentally gas, water and or electricity meter reading requests together with advertising to messaging terminals were to arrive in a very short period of time at one particular exchange telephony service could be adversely degraded by the presence of non-time critical service offering.

Where the network operator is the sole provider of non-time critical services such a clash can be avoided by the network operators own management systems ensuring that the distribution of such calls is reasonable having regard to normal telephony demands of local exchanges. However, regulation and competitive service requirements of such regulations to avoid monopoly misuse require PSTN operators to grant network access to other licensed network operators (OLOs).

Similarly, where competing PSTN services are offered by several network operators in a locality the telemetry service operator on one network will require access to persons whose lines appear only on another network so that a complete service can be provided for all potential customers. As call distribution capability moves away from a particular PSTN operator then some method of restricting focused overload is required.

In EPA 0687116 there is disclosed a telecommunications network in which the completion of calls is managed according to respective levels of service by having different call gapping rates dependent upon the level of service. The call gapping rates are solely dependent on the level of service and are not variable to take account of congestion factors which could lead to a focused overload.

According to the present invention there is provided a telecommunications network comprising a plurality of switching units interconnected to provide telephony service to customers and having network access points connected to a plurality of service platforms providing Non-Time Critical Communication (NTCC) services characterised in that each switching unit is allocated a volumetric limit for NTCCs and, on receipt of a NTCC which causes the limit to be exceeded, transmits a congestion indication to the originating service platform, each service platform on receipt of a congestion indication commencing a time out determined by a multiplying a random number (RN) by a weighting factor (W) determined from a current gapping rate (GR) to produce a value of intercall delay (ICD) which determines a period during which the service platform offers no NTCCs to the congested switching unit.

Preferably the value of GR is compared against upper and lower band limits of a series of bands each band providing a respective W which substantially increases the period during which NTCCs are not attempted.

Each platform offers NTCCs to a switching unit sequentially at a rate determined by GR and after expiry of the period determined by ICD the value of GR is adjusted so that the period between sequential calls from the respective platform is increased.

After "N" successful offerings of NTCCs by a platform (where N is an integer of at least one) the value of GR may be adjusted so that the period between sequential call offerings is reduced. The value of GR may be bounded to limit the maximum rate of call offering or the maximum value of ICD.

A feature of the invention provides a telecommunications service platform which generates non time critical calls including control means responsive to a congestion indication received from a telecommunications network to restrict or delay the offering of NTCCs to specified destinations (41-4n,51-5n,61-6n) of the network characterised in that on receipt of a congestion indication the control means commences a time out determined by a multiplying a random number (RN) by a weighting factor (W) determined from a current gapping rate (GR) in respect of a congested destination (41-4n,51-5n,61-6n) to produce a value of intercall delay (ICD) which determines a period during which the service platform (9,10,11) offers no NTCCs to the congested destination (41-4n,51-5n,61-6n).

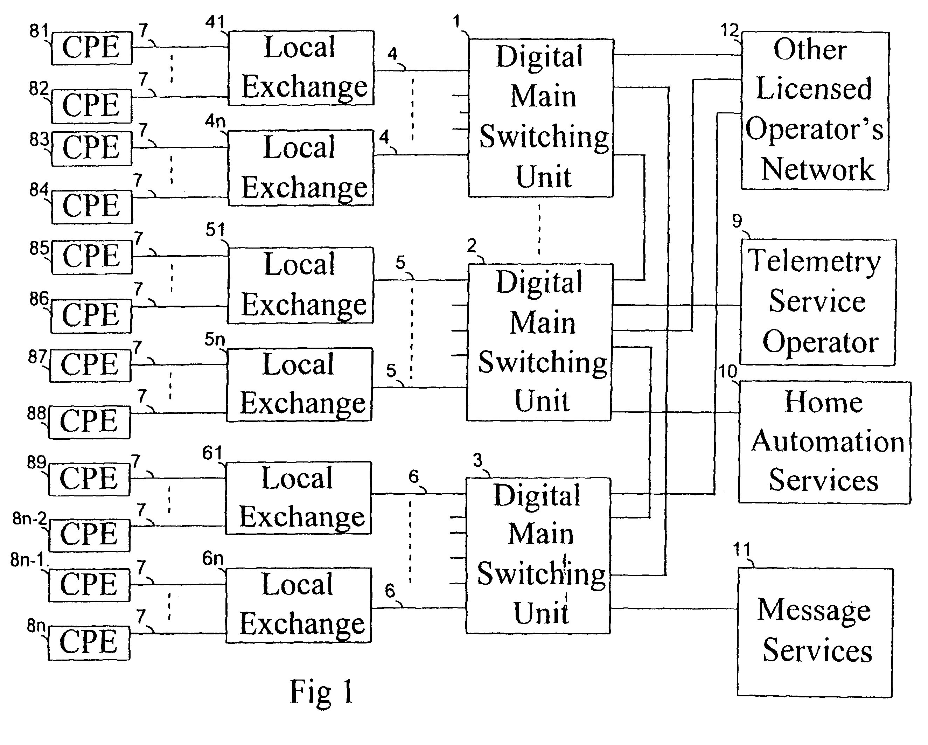

A telecommunications network in accordance with the invention will now be described with reference to the accompanying drawing which shows a telecommunications network. Referring to the drawing a typical PSTN comprises a multiplicity of Digital Main Switching Units (DMSUs) represented by DMSUs 1, 2 and 3. Each DMSU is connected to a plurality of local exchanges 4/1 to 4/n, 5/1 to 5/n, 6/1 to 6/n which exchanges are connected to provide individual telephony service through local lines 7 to customer premises equipment 8/1 to 8/n.

As so far described the system is representative of many digital switched telecommunications networks. However, some digital networks, for example that provided by BT in the United Kingdom have the ability to use C7 signalling across the network to indicate to the local exchanges that a call being offered is of the no ring type, that is a call connection by way of the local loop 7 to customer premises equipment which can be alerted by use of line reversal and/or current signalling techniques. Networks of this kind are discussed in our co-pending patent application number PCT/GB95/00853

An advantage of this kind of facility is that the network operator may offer access to the customer premises for connection to specialised equipment such as meter reading units, messaging terminals ETG E-mail display terminals or other services such as that disclosed in co-pending patent application number GB960096.3.

Other operators of similar services for example an independent telemetry service operator 9 or home automation service 10 or message service provider 11 may request access to customers of the PSTN operator. Further, other licensed operators 12 having network access through DMSUs 1, 2 and 3 may have similar service operators (not shown) accessing the network through the OLO access.

It will be appreciated that these reciprocal arrangements between major network operators are required in order to provide a complete service to e.g. telemetry service operator 9 otherwise customers of the service will need to subscribe to a service on each network. Thus reciprocal arrangements between network operators through interconnection agreements are usually put into place.

Telemetry service and certain message services (e.g. advertising services) and some home automation type accesses are normally of a non-time critical nature. In practice where the PSTN operator provides a telemetry service to other utilities for example to electricity, gas or water suppliers it is usual for the non time critical access to the CPE or meter reading to be carried out at quiet periods. This avoids causing serious network congestion. Further, where the PSTN operator is also a service provider a network management system is able to pin point areas of congestion within the network so that non time critical communications are not made through congested exchanges.

Once access control through the DMSUs 1, 2 and 3 is granted to other operators of non time critical services then a more specific control of these services is required since more than one of the service platforms 9, 10 and 11, either directly of through the other licensed operators network 12, will be seeking to access the same local switching group at the same time.

Now assuming that each of the local exchanges, 41-4N, 51-5N, 61-6n has a control unit responsive to C7 signalling from its DMSU 1 by way of a digital trunk route 4, 5, 6 each local exchange control unit has a rate limit and a maximum volume set. A rate limit determines the maximum number of calls per minute which the exchange will handle while the volume limit determines the maximum of calls which may be progress at the same time. Similarly, the DMSU will have for each of the routes say 4, a rate and volume limit.

Where either the local exchange say 41 or the DMSU 1 respectively determines that a call offered by e.g. the telemetry service platform 9 for one of the customers 81, 82 will cause the volume or rate limit to be exceeded it will return C7 signalling indicative of congestion. If the respective service platform 9, 10 and 11 receives an exchange congestion signal while attempting a call to a particular local exchange 41 the congestion back up algorithm is applied. For the purposes of description each of the platforms 9, 10 and 11 is referred to as a TP and within the TP up to the point at which the congestion signal is received from the network call rate limiting is applied on a per local exchange for example on the basis of the expression call gapping rate equals k/n where n is an integer and k is a constant in which k/n when rounded up to the nearest 100 millisecond period defines the period between successive non-critical call offerings to the respective local exchange 41. In the United Kingdom k is 5 since the force release period adopted by the main PSTN operator is 5 seconds. The invention is not however limited to such a period.

On receipt of line congestion control means within the TP determines a random number based on a seed of 10 (e.g. RND 10). Using the current intercall gapping rate (GR) the control now applies the random number in accordance with the following table.

| Current Call Gapping (GR) in seconds for congested DLE | Delay to next call attempt |
|---|---|
| 0 < GR < 1 | RND (10) X 0.1 sec |
| 1 < GR < 10 | RND (10) x 1 sec |
| 10< GR < 100 | RND (10) x 10 sec |
| 100< GR< 1000 | RND ( 10) x 100 sec |

The application of a random number based on a seed ensures that if several service platforms are transmitting to a particular local exchange 41 and each receives a back off congestion signal at the same time the platforms each attempt to connect a non time critical call after a different delay.

After applying the delay described above the TP resumes offering calls to the local exchange 41 but with a longer delay period namely 2 x 5/n or 10/n second intercall delay. Thus the rate of which calls are now offered by the respective TP to the local exchange is half that of the attempt rate prior to receiving congestion indication. Further failures will result in a geometric increase in GR with a common factor of 2.

If after applying the call delay and before further modification of GR a further congestion indication is received a new intercall delay is calculated as described in accordance with the table above and is applied prior to attempting to resume calling at 50% of the new prevailing rate.

Thus each time successive call attempts result in congestion indication being returned either from a DMSU or from a local exchange the period before a further call is offered by the respective TP to the respective local exchange increases and the rate at which successive calls are offered is reduced.

As the resumption of calling from a number of TPs is staggered by virtue of the random number then the build up of non-time critical traffic through a local exchange is staggered when congestion caused by the volume or rate limit excess has cleared.

Once a telephony platform has succeeded in offering a number of calls successfully to the same local exchange say 41 without further congestion occurring then the rate at which calls are offered may be progressively doubled until the value of GR reaches the predetermined value of 5 over n.

Note that the maximum value of GR is limited so that after the intercall delay of RND (10 ×100) has been applied if the gapping rate exceed 999 seconds then the period between calls will not be further increased as a result of additional congestion messages.

The algorithm above has more than one source of random behaviour inherent therein as multiple circuit or accesses to the local exchange are possible. As a succession of calls to one of the exchanges which brought about exchange congestion will in general all have been originated at a different time and will have encountered congestion at a different absolute time, the respective intercall delays from different platforms and the period during which calls are not offered from different platforms will vary.

Only small increases in inter call delay occur where short term congestion applies. Where much longer delays are necessary where long-term no ring call volume or connected congestion is encountered reasonably rapid recovery to normal intercail delay occurs when an exchange congestion situation is no longer present. It will be noted that the DMSUs and/or local exchanges may be programmed to vary the volume and/or rate limit values for non-time critical calls where the presence of telephony or other time critical call volume has increased.

## Claims

1. A telecommunications network comprising a plurality of switching units (1,2,3,41-4n,51-5n,61-6n) interconnected to provide telephony service to customers (7) and having network access points connected to a plurality of service platforms (9,10,11) providing Non-Time Critical Communication NTCC services **characterised in that** each switching unit (41-4n,51-5n,61-6n) is allocated a volumetric limit for NTCCs and, on receipt of a NTCC which causes the limit to be exceeded, is adapted to transmit a congestion indication to the originating service platform (9,10,11), each service platform (9,10,11) on receipt of a congestion indication commencing a time out determined by a multiplying a random number RN by a weighting factor W determined from a current gapping rate GR to produce a value of intercall delay ICD which determines a period during which the service platform (9,10,11) offers no NTCCs to the congested switching unit (41-4n,51-5n,61-6n).

2. A telecommunications network as claimed in claim 1 further **characterised in that** the value of GR is compared against upper and lower band limits of a series of bands each band providing a respective W which substantially increases the period during which NTCCs are not attempted.

3. A telecommunications network as claimed in claim 1 or claim 2 further **characterised in that** each platform (9,10,11) offers NTCCs to a switching unit (41-4n,51-5n,61-6n) sequentially at a rate determined by GR.

4. A telecommunications network as claimed in claim 3 further **characterised in that** after expiry of the period determined by ICD the value of GR is adjusted so that the period between sequential calls from the respective platform (9,10,11) is increased.

5. A telecommunications network as claimed in claim 4 further **characterised in that** after "N" successful offerings of NTCCs by a platform (9,10,11) (where N is an integer of at least one) the value of GR is adjusted so that the period between sequential call offerings is reduced.

6. A telecommunications network as claimed in claim 5 further **characterised in that** the value of GR returns to the value held immediately prior to the last received congestion indication.

7. A telecommunications network as claimed in claim 6 further **characterised in that** after each successive "N" successful offerings of NTCCs the value of GR progressively returns to values held prior to receipt of sequential congestion indications.

8. A telecommunications network as claimed in any preceding claim further **characterised in that** the value of GR is bounded to limit the maximum rate of call offering.

9. A telecommunications network as claimed in any preceding claim further **characterised in that** the value of GR is bounded to limit the maximum value of ICD.

10. A telecommunications service platform which generates non time critical calls NTCCs including control means responsive to a congestion indication received from a telecommunications network to restrict or delay the offering of NTCCs to specified destinations (41-4n,51-5n,61-6n) of the network **characterised in that** on receipt of a congestion indication the control means are adapted to commence a time out determined by multiplying a random number RN by a weighting factor W determined from a current gapping rate GR in respect of a congested destination (41-4n,51-5n,61-6n) to produce a value of intercall delay ICD which determines a period during which the service platform (9,10,11) offers no NTCCs to the congested destination (41-4n,51-5n,61-6n).

11. A telecommunications service platform as claimed in claim 10 further **characterised in that** the value of GR is compared against upper and lower band limits of a series of bands each band providing a respective W which substantially increases the period during which NTCCs are not attempted.

12. A telecommunications service platform as claimed in claim 10 or claim 11 further **characterised in that** the platform (9,10,11) offers NTCCs to a predetermined destination (41-4n,51-5n,61-6n) sequentially at a rate determined by GR.

13. A telecommunications service platform as claimed in claim 12 further **characterised in that** after expiry of the period determined by ICD the value of GR is adjusted so that the period between sequential calls from to the respective destination is increased.

14. A telecommunications service platform as claimed in claim 13 further **characterised in that** after "N" successful offerings of NTCCs to a previously congested destination (41-4n,51-5n,61-6n) (where N is an integer of at least one) the value of GR is adjusted so that the period between sequential call offerings is reduced.

15. A telecommunications service platform as claimed in claim 14 further **characterised in that** the value of GR returns to the value held immediately prior to the last received congestion indication.

16. A telecommunications service platform as claimed in claim 15 further **characterised in that** after each successive "N" successful offerings of NTCCs the value of GR progressively returns to values held prior to receipt of sequential congestion indications.

17. A telecommunications service platform as claimed in any one of claims 10 to 16 further **characterised in that** the value of GR is bounded to limit the maximum rate of call offering.

18. A telecommunications service platform as claimed in any one of claims 10 to 17 further **characterised in that** the value of GR is bounded to limit the maximum value of ICD.

## Patentansprüche

1. Telekommunikationsnetzwerk mit mehreren Vermittlungseinheiten (1, 2, 3, 41-4n, 51-5n, 61-6n), die miteinander verbunden sind, um Kunden (7) Telefoniedienste zur Verfügung zu stellen, und die Netzwerkzugangspunkte haben, die mit mehreren Dienstplattformen (9, 10, 11) verbunden sind, die Dienste mit nicht-zeitkritischer Kommunikation NTTC bereitstellen, **dadurch gekennzeichnet, dass** jeder Vermittlungseinheit (41-4n, 51-5n, 61-6n) eine Begrenzung bezüglich des Datenaufkommens für die NTTCs zugewiesen ist, und die dazu eingerichtet ist, auf den Empfang einer NTTC hin, die verursacht, dass die Begrenzung überschritten wird, eine Stauanzeige an die Dienstplattform (9, 10, 11), von der sie stammt, zu senden, wobei jede Dienstplattform (9, 10, 11) auf den Empfang einer Stauanzeige hin mit einem begrenzten Zeitabschnitt beginnt, der durch Multiplikation einer Zufallszahl RN mit einem Gewichtungsfaktor W festgelegt wird, der aus einer aktuellen Lückenrate GR bestimmt wird, um einen Wert für die Verzögerung zwischen Anrufen ICD zu erzeugen, der eine Zeitdauer bestimmt, während der die Dienstplattform (9, 10, 11) der vom Stau betroffenen Vermittlungseinheit (41-4n, 51-5n, 61-6n) keine NTTCs anbietet.

2. Telekommunikationsnetzwerk nach Anspruch 1, das weiter **dadurch gekennzeichnet ist, dass** der Wert von GR mit oberen und unteren Bandbegrenzungen einer Reihe von Bändern verglichen wird, wobei jedes Band einen jeweiligen W liefert, der im wesentlichen die Zeitdauer erhöht, während der NTTCs nicht versucht werden.

3. Telekommunikationsnetzwerk nach Anspruch 1 oder Anspruch 2, **dadurch gekennzeichnet, dass** jede Plattform (9, 10, 11) einer Vermittlungseinheit (41-4n, 51-5n, 61-6n) sequenziell NTTCs mit einer Rate anbietet, die von GR bestimmt wird.

4. Telekommunikationsnetzwerk nach Anspruch 3, weiter **dadurch gekennzeichnet dass** nach Auslaufen der Zeitdauer, die von ICD bestimmt wird, der Wert von GR derart eingestellt wird, dass die Zeitdauer zwischen aufeinanderfolgenden Anrufen von der entsprechenden Plattform (9, 10, 11) erhöht wird.

5. Telekommunikationsnetzwerk nach Anspruch 4, weiter **dadurch gekennzeichnet, dass** nach "N" erfolgreichen Angeboten von NTTCs von einer Plattform (9, 10, 11) (wobei N eine ganze Zahl von wenigstens eins ist) der Wert von GR derart eingestellt wird, dass die Zeitdauer zwischen aufeinanderfolgenden Anrufangeboten verringert wird.

6. Telekommunikationsnetzwerk nach Anspruch 5, weiter **dadurch gekennzeichnet, dass** der Wert von GR auf den Wert zurückgesetzt wird, der unmittelbar vor der letzten Stauanzeige gespeichert war.

7. Telekommunikationsnetzwerk nach Anspruch 6, weiter **dadurch gekennzeichnet, dass** nach "N" erfolgreichen Angeboten von NTTCs der Wert von GR progressiv auf Werte zurückgesetzt wird, die vor dem Empfang von aufeinanderfolgenden Stauanzeigen gespeichert waren.

8. Telekommunikationsnetzwerk nach einem oder mehreren der vorangehenden Ansprüche, weiter **dadurch gekennzeichnet, dass** der Wert von GR begrenzt ist, um die maximale Rate der Anrufangebote zu begrenzen.

9. Telekommunikationsnetzwerk nach einem oder mehreren der vorangehenden Ansprüche, weiter **dadurch gekennzeichnet, dass** der Wert von GR begrenzt ist, um den Maximalwert von ICD zu begrenzen.

10. Telekommunikationsdienstplattform, die nicht-zeitkritische Anrufe NTTCs erzeugt, die eine Steuereinrichtung enthält, die auf eine Stauanzeige reagiert, die von einem Telekommunikationsnetzwerk empfangen wird, um das Anbieten von NTTCs an angegebene Ziele (41-4n, 51-5n, 61-6n) des Netzwerks zu begrenzen oder zu verzögern, **dadurch gekennzeichnet, dass** die Steuereinrichtung dazu eingerichtet ist, nach dem Empfang einer Stauanzeige mit einem Zeitabschnitt zu beginnen, der durch Multiplizieren einer Zufallszahl RN mit einem Gewichtungsfaktor W festgelegt wird, der aus einer aktuellen Lückenrate GR hinsichtlich eines vom Stau betroffenen Ziels (41-4n, 51-5n, 61-6n) bestimmt wird, um einen Wert für die Verzögerung zwischen Anrufen ICD zu erzeugen, der eine Zeitdauer bestimmt, während der die Dienstplattform (9, 10, 11) dem vom Stau betroffenen Ziel (41-4n, 51-5n, 61-6n) keine NTTCs anbietet.

11. Telekommunikationsdienstplattform nach Anspruch 10, weiter **dadurch gekennzeichnet, dass** der Wert von GR mit oberen und unteren Bandbegrenzungen einer Reihe von Bändern verglichen wird, wobei jedes Band einen jeweiligen W liefert, der im wesentlichen die Zeitdauer erhöht, während der NTTCs nicht versucht werden.

12. Telekommunikationsdienstplattform nach Anspruch 10 oder Anspruch 11, weiter **dadurch gekennzeichnet, dass** die Plattform (9, 10, 11) einem vorher festgelegten Ziel (41-4n, 51-5n, 61-6n) NTTCs sequenziell mit einer Rate anbietet, die von GR bestimmt wird.

13. Telekommunikationsdienstplattform nach Anspruch 12, weiter **dadurch gekennzeichnet, dass** nach Ablauf der Zeitdauer, die durch ICD festgelegt wird, der Wert von GR derart eingestellt wird, dass die Zeitdauer zwischen aufeinanderfolgenden Anrufen an das entsprechende Ziel erhöht wird.

14. Telekommunikationsdienstplattform nach Anspruch 13, weiter **dadurch gekennzeichnet, dass** nach "N" erfolgreichen Angeboten von NTTCs an ein zuvor vom Stau betroffenes Ziel (41-4n, 51-5n, 61-6n) (wobei N eine ganze Zahl von wenigstens eins ist) der Wert von GR derart eingestellt wird, dass die Zeitdauer zwischen aufeinanderfolgenden Anrufangeboten verringert wird.

15. Telekommunikationsdienstplattform nach Anspruch 14, weiter **dadurch gekennzeichnet, dass** der Wert von GR auf den Wert zurückgesetzt wird, der unmittelbar vor der letzten empfangenen Stauanzeige gespeichert war.

16. Telekommunikationsdienstplattform nach Anspruch 15, weiter **dadurch gekennzeichnet, dass** nach jeden erfolgreichen "N" Angeboten von NTTCs der Wert von GR progressiv auf Werte zurückgesetzt wird, die vor dem Empfang von aufeinanderfolgenden Stauanzeigen gespeichert waren.

17. Telekommunikationsdienstplattform nach einem oder mehreren der Ansprüche 10 bis 16, weiter **dadurch gekennzeichnet, dass** der Wert von GR begrenzt ist, um die maximale Rate von Anrufangeboten zu begrenzen.

18. Telekommunikationsdienstplattform nach einem der Ansprüche 10 bis 17, weiter **dadurch gekennzeichnet, dass** der Wert von GR begrenzt ist, um den Maximalwert von ICD zu begrenzen.

## Revendications

1. Réseau de télécommunications comprenant une pluralité d'unités de commutation (1, 2, 3, 41-4n, 51-5n, 61-6n) interconnectées pour procurer un service de téléphonie à des usagers (7) et comportant des points d'accès au réseau reliés à une pluralité de plates-formes de services (9, 10, 11) fournissant des services de communications non critiques dans le temps (NTCC) **caractérisé en ce que** chaque unité de commutation (41-4n, 51-5n, 61-6n) se voit allouer une limite volumétrique pour les communications NTCC et, à la réception d'une communication NTCC qui amène la limite à être dépassée, est conçue pour transmettre une indication d'encombrement à la plate-forme de services d'origine (9, 10, 11), chaque plate-forme de services (9, 10, 11), à la réception d'une indication d'encombrement, débutant une temporisation déterminée par une multiplication d'un nombre aléatoire RN par un facteur de pondération W déterminé à partir d'un taux de temps mort en cours GR pour produire une valeur de délai entre les appels ICD qui détermine une période durant laquelle la plate-forme de services (9, 10, 11) ne propose aucune communication NTCC à l'unité de commutation encombrée (41-4n, 51-5n, 61-6n).

2. Réseau de télécommunications selon la revendication 1, **caractérisé en outre en ce que** la valeur de GR est comparée à des limites de bandes supérieure et inférieure d'une série de bandes, chaque bande fournissant un facteur W respectif qui augmente substantiellement la période durant laquelle des communications NTCC ne sont pas tentées.

3. Réseau de télécommunications selon la revendication 1 ou la revendication 2, **caractérisé en outre en ce que** chaque plate-forme (9, 10, 11) propose des communications NTCC à une unité de commutation (41-4n, 51-5n, 61-6n) séquentiellement à une cadence déterminée par la valeur GR.

4. Réseau de télécommunications selon la revendication 3, **caractérisé en outre en ce qu'**après une expiration de la période déterminée par le délai ICD, la valeur de GR est ajustée de manière à ce que la période entre des appels séquentiels provenant de la plate-forme respective (9, 10, 11) soit augmentée.

5. Réseau de télécommunications selon la revendication 4, **caractérisé en outre en ce qu'**après "N" propositions réussies de communications NTCC par une plate-forme (9, 10, 11) (où N est un nombre entier de valeur au moins un) la valeur de GR est ajustée de manière à ce que la période entre des propositions d'appels séquentielles soit réduite.

6. Réseau de télécommunications selon la revendication 5, **caractérisé en outre en ce que** la valeur de GR reprend la valeur conservée immédiatement avant la dernière indication d'encombrement reçue.

7. Réseau de télécommunications selon la revendication 6, **caractérisé en outre en ce qu'**après chacune de "N" propositions réussies successives de communications NTCC, la valeur de GR revient progressivement à des valeurs conservées avant la réception des indications d'encombrement séquentielles.

8. Réseau de télécommunications selon l'une quelconque des revendications précédentes, **caractérisé en outre en ce que** la valeur de GR est bornée pour limiter la cadence maximale des propositions d'appels.

9. Réseau de télécommunications selon l'une quelconque des revendications précédentes, **caractérisé en outre en ce que** la valeur de GR est bornée pour limiter la valeur maximale de ICD.

10. Plate-forme de services de télécommunications qui génère des appels NTCC non critiques par rapport au temps comprenant un moyen de commande répondant à une indication d'encombrement reçue d'un réseau de télécommunications pour restreindre ou retarder la proposition des communications NTCC à des destinations spécifiées (41-4,; 51-5n, 61-6n) du réseau, **caractérisée en ce que**, à la réception d'une indication d'encombrement, le moyen de commande est conçu pour débuter une temporisation déterminée par la multiplication d'un nombre aléatoire RN par un facteur de pondération W déterminé d'après un taux de temps mort en cours GR en fonction d'une destination encombrée (41-4n, 51-5n, 61-6n) afin de produire une valeur de délai entre les appels ICD qui déterminent une période durant laquelle la plate-forme de services (9, 10, 11) ne propose aucune communication NTCC à la destination encombrée (41-4n, 51-5n, 61-6n).

11. Plate-forme de services de télécommunications selon la revendication 10, **caractérisée en outre en ce que** la valeur de GR est comparée à des limites de bandes supérieure et inférieure d'une série de bandes, chaque bande procurant un facteur W respectif qui augmente substantiellement la période durant laquelle les communications NTCC ne sont pas tentées.

12. Plate-forme de services de télécommunications selon la revendication 10 ou la revendication 11, **caractérisée en outre en ce que** la plate-forme (9, 10, 11) propose des communications NTCC à une destination prédéterminée (41-4n, 51-5n, 61-6n) séquentiellement à une cadence déterminée par la valeur GR.

13. Plate-forme de services de télécommunications selon la revendication 12, **caractérisée en outre en ce qu'**après l'expiration de la période déterminée par la valeur ICD, la valeur de GR est ajustée de manière à ce que la période entre des appels séquentiels provenant de la destination respective soit augmentée.

14. Plate-forme de service de télécommunications selon la revendication 13, **caractérisée en outre en ce qu'**après "N" propositions réussies de communications NTCC à une destination précédemment encombrée (41-4n, 51-5n, 61-6n) (où N est un nombre entier de valeur au moins un) la valeur de GR est ajustée de manière à ce que la période entre des propositions d'appels séquentielles soit réduite.

15. Plate-forme de services de télécommunications selon la revendication 14, **caractérisée en outre en ce que** la valeur de GR revient à la valeur conservée immédiatement avant la dernière indication d'encombrement reçue.

16. Plate-forme de services de télécommunications selon la revendication 15, **caractérisée en outre en ce qu'**après chacune de "N" propositions réussies successives de communications NTCC, la valeur de GR revient progressivement à des valeurs conservées avant la réception des indications d'encombrement séquentielles.

17. Plate-forme de services de télécommunications selon l'une quelconque des revendications 10 à 16, **caractérisée en outre en ce que** la valeur de GR est bornée pour limiter la cadence maximale des propositions d'appels.

18. Plate-forme de services de télécommunications selon l'une quelconque des revendications 10 à 17, **caractérisée en outre en ce que** la valeur de GR est bornée pour limiter la valeur maximale de ICD.
